# EUROPEAN PATENT SPECIFICATION

(11) **EP 3 957 686 B1**
(45) Date of publication and mention of the grant of the patent: **25.10.2023**
(21) Application number: 21773464.9
(22) Date of filing: 24.02.2021
(51) Int. Cl.: C08L 67/02, C08L 67/04, C08L 5/14, C08L 3/02, C08K 5/14, C08K 5/09, C08B 37/14, A01M 1/14, C08H 8/00

(54) **BIODEGRADABLE MATERIAL, AND RAW MATERIAL COMPOSITION, PREPARATION METHOD, AND USE THEREOF**
BIOLOGISCH ABBAUBARES MATERIAL UND ROHMATERIALZUSAMMENSETZUNG, HERSTELLUNGSVERFAHREN UND DESSEN VERWENDUNG
MATÉRIAU BIODÉGRADABLE, ET COMPOSITION DE MATIÈRE PREMIÈRE, PROCÉDÉ DE PRÉPARATION ET SON UTILISATION

(30) Priority: 24.06.2020 CN 202010591728
(43) Date of publication of application: 23.02.2022
(73) Proprietor: Shanghai Changfa New Materials Co., Ltd., Shanghai 200030 (CN)
(72) Inventor: SHI, Quentin, Shanghai, 200030 (CN); ZHAI, Yanrong, Shanghai, 200030 (CN); JIN, Xiachao, Shanghai, 200030 (CN)
(74) Representative: Petculescu, Ana-Maria
(86) International application number: PCT/CN2021/077662
(87) International publication number: WO 2021/258760

(56) References cited:
- CN-A- 102 309 011
- CN-A- 109 694 556
- CN-A- 111 171 529
- CN-A- 111 171 529
- CN-A- 111 234 477
- CN-A- 111 234 477
- CN-A- 111 825 961
- US-A1- 2019 077 958
- US-A1- 2019 077 958

## Description

This application claims priority to Chinese Patent Application CN202010591728.1 filed on June 24, 2020.

### TECHNICAL FIELD

The present disclosure specifically relates to a biodegradable material, and a raw material composition, a preparation method, and use thereof.

### BACKGROUND

Small pests such as thrips, whiteflies, aphids, and *Liriomyza* have always been the main pests that greatly damage vegetables, flowers, and other important cash crops due to its tiny size, high reproduction speed, hidden activities, and wide host range. A pest-trapping board is an important physical pest prevention product, which conforms to the green, safe, and environmentally-friendly plant protection concept, and has been widely used for monitoring and preventing pests in the production of vegetables, flowers, and trees. The use of pest-trapping boards effectively reduces the use of chemical pesticides, delays the development of pesticide resistance in pests, reduces pesticide residues in the environment and fruits and vegetables, and improves the food quality.

A substrate used for existing pest-trapping boards is polypropylene (PP) or polyvinyl chloride (PVC) from the petrochemical industry. During use, a layer of pest-trapping glue is coated on each side of a PP or PVC plastic board, and then a finished pest-trapping board is hung in a target area. The pest-trapping boards used to kill pests can avoid environmental pollution caused by pesticides. However, as the pest-trapping boards are mainly made of PP, discarded pest-trapping boards will also pollute the environment due to difficult degradation. Discarded pest-trapping boards may cause serious secondary pollution to the agricultural ecological environment, and the subsequent treatment of discarded pest-trapping boards is extremely troublesome, which brings inconvenience to field cleaning. In recent years, existing pest-trapping boards have been used increasingly, and the number of used pest-trapping boards has increased year by year, causing more serious damage to the agricultural ecological environment.

Pest-traps prepared form biodegradable compositions based on polybutylene terephthalate, polylactic acid and starch are known from CN111171529A and CN111234477A.

Hemicellulose is very common in the nature. Hemicellulose has a content of 1/4 to 1/3 in a lignocellulosic biomass (LCB), which is second only to a content of cellulose. At present, the use of hemicellulose is mostly used for ethanol synthesis, which is relatively simply, with small economic benefits. Moreover, the utilization of hemicellulose in the nature is low.

Therefore, there is an urgent need in the art to develop a biodegradable pest-trapping board that involves widely-available raw materials, does not pollute the environment, has ideal mechanical properties and pest-trapping effects, and can achieve the maximum resource utilization.

### SUMMARY

A technical problem to be solved by the present disclosure: In order to overcome the shortcomings in the prior art that raw materials of existing pest-trapping boards are difficult to degrade in the nature and have high cost and hemicellulose in biomass materials has not been widely used, the present disclosure provides a biodegradable material, and a raw material composition, a preparation method, and use thereof. The biodegradable material and biodegradable product prepared by the present disclosure can be completely degraded by microorganisms in the nature to finally produce carbon dioxide and water, causing no environmental pollution. In the present disclosure, hemicellulose is added into a biodegradable resin, which reduces a cost of the biodegradable pest-trapping board and improves the mechanical properties of the biodegradable material. Moreover, the present disclosure expands the use of hemicellulose and improves the economic benefits of hemicellulose.

The present disclosure adopts the following technical solutions to solve the above technical problems:
The present disclosure provides a raw material composition of a biodegradable material, including the following components, in parts by weight: 100 parts of poly(butylene adipate-co-terephthalate) (PBAT), 14.2 to 100 parts of polylactic acid (PLA), 14.2 to 100 parts of hemicellulose, 14.3 to 50 parts of starch, and 2.8 to 37.5 parts of an additive;
where the additive includes one or more from the group consisting of 0.7 to 5 parts of a crosslinking agent, 1.4 to 20 parts of a plasticizer, and 0.7 to 7.5 parts of a lubricant; and the crosslinking agent is one or more from the group consisting of dicumyl peroxide (DCP), benzoyl peroxide (BPO), and 2,5-dimethyl-2,5-di-(tert-butylperoxy)hexane.

In the present disclosure, a melt flow rate (MFR) of the PBAT at 190°C/2.16 kg may be a conventional MFR of such a substance in the art, which may be preferably 3 to 5 g/10 min and more preferably 4 to 5 g/10 min.

In the present disclosure, an MFR of the PLA at 190°C/2.16 kg may be a conventional MFR of such a substance in the art, which may be preferably 3 to 5 g/10 min and more preferably 3.5 to 5 g/10 min.

In the present disclosure, the starch may be starch conventionally used in the art, which may preferably be one or more from the group consisting of tapioca starch, corn starch, potato starch, wheat starch, cationic modified starch, and anionic modified starch, and may more preferably be any one from the group consisting of corn starch, potato starch, wheat starch, and tapioca starch.

In the present disclosure, the crosslinking agent may be preferably DCP or BPO.

In the present disclosure, the plasticizer may be a plasticizer conventionally used in the art, which may preferably be one or more from the group consisting of tributyl citrate (TBC), acetyl tributyl citrate (ATBC), glycerin, and epoxy soybean oil (ESO), and may more preferably be any one from the group consisting of ATBC, ESO, and glycerin.

In the present disclosure, the lubricant may be a lubricant conventionally used in the art, which may preferably be one or more from the group consisting of stearic acid, calcium stearate, butyl stearate, oleamide, and PE wax, and may more preferably be any one from the group consisting of stearic acid, calcium stearate, and PE wax.

In the present disclosure, the PLA may account for preferably 23 to 78 and more preferably 33 to 60 parts by weight, such as any one from the group consisting of 25, 27, and 75 parts by weight.

In the present disclosure, the hemicellulose may account for preferably 23 to 78 and more preferably 33 to 60 parts by weight, such as any one from the group consisting of 25, 36, and 75 parts by weight.

In the present disclosure, the starch may account for preferably 8.3 to 40 and more preferably 14.2 to 25 parts by weight, such as 18.1 parts by weight.

In the present disclosure, the additive may account for preferably 4.6 to 29 and more preferably 11.4 to 20 parts by weight.

The crosslinking agent may account for preferably 1 to 3.75 and more preferably 1.42 to 2.5 parts by weight, such as 1.8 parts by weight.

The plasticizer may account for preferably 2.8 to 17.5 and more preferably 8.5 to 15 parts by weight, such as 11 parts by weight.

The lubricant may account for preferably 1.4 to 6.25 and more preferably 1.4 to 2.5 parts by weight, such as 1.8 parts by weight.

In the present disclosure, the raw material composition of a biodegradable material may further include a biodegradable color concentrate and/or a biodegradable toner.

The biodegradable color concentrate may be a biodegradable color concentrate conventionally used in the art, which may generally be a biodegradable yellow concentrate.

The biodegradable toner may be a biodegradable toner conventionally used in the art, which may generally be a biodegradable yellow toner.

Based on 100 parts by weight of the PBAT, the biodegradable color concentrate and/or the biodegradable toner may account for 1.4 to 37.5, preferably 3 to 26.7, and more preferably 4.2 to 7.5 parts by weight, such as any one from the group consisting of 4.3, 5.5, and 7.5 parts by weight.

In the present disclosure, a preparation method of the hemicellulose may be a conventional method for extracting hemicellulose from a plant in the art, which generally includes the following steps:
(1) crushing, cooking, and filtering a plant to obtain a filter residue;
(2) subjecting the filter residue to extraction with a sodium hydroxide aqueous solution, and filtering a resulting extraction solution to obtain a filtrate; and adjusting a pH of the filtrate to 7 to 7.5, and centrifuging the filtrate to obtain a precipitate A; and
(3) mixing the precipitate A with an ethanol aqueous solution, and centrifuging a resulting mixture to obtain a precipitate.

In step (1), the plant may be one or more from the group consisting of wood, cotton stalk, cotton linter, wheat straw, rice straw, reed, hemp, mulberry bark, *Broussonetia papyrifera* bark, and bagasse, and may preferably be any one from the group consisting of wood, cotton straw, and hemp.

In step (1), a temperature of the cooking may be a conventional temperature of such an operation in the art, which may be preferably 130°C to 140°C and more preferably 135°C to 140°C.

In step (1), a time of the cooking may be a conventional time of such an operation in the art, which may be preferably 20 min to 40 min and more preferably 30 min to 40 min.

In step (2), a temperature of the extraction may be a conventional temperature of such an operation in the art, which may be preferably 75°C to 85°C and more preferably 80°C to 85°C.

In step (2), a time of the extraction may be a conventional time of such an operation in the art, which may be preferably 1.5 h to 2.5 h and more preferably 2 h to 2.5 h.

In step (2), the sodium hydroxide aqueous solution may have a concentration of 9 g/dL to 11 g/dL and preferably 10 g/dL.

In step (2), a mass ratio of the sodium hydroxide aqueous solution to the plant may be 2:1.

In step (2), the pH may be adjusted to 7 to 7.5 with conventional conditions and methods in the art, and an acidic adjusting agent may generally be used to adjust the pH. The acidic adjusting agent may be hydrochloric acid with a concentration of 5 mol/L to 7 mol/L and preferably hydrochloric acid with a concentration of 6 mol/L.

In step (2), conditions and methods for the centrifugation may be conventional conditions and methods for such an operation in the art.

In step (2), the centrifugation may be conducted at a rotational speed of 2,500 r/min to 3,500 r/min and preferably 3,000 r/min to 3,500 r/min.

In step (2), the centrifugation may be conducted for 15 min to 25 min and preferably 20 min to 25 min.

In step (3), a mass ratio of the ethanol aqueous solution to the plant may be 3:1.

In step (3), conditions and methods for the centrifugation may be conventional conditions and methods for such an operation in the art.

In step (3), the centrifugation may be conducted at a rotational speed of 2,500 r/min to 3,500 r/min and preferably 3,000 r/min to 3,500 r/min.

In step (3), the centrifugation may be conducted for 15 min to 25 min and preferably 20 min to 25 min.

In step (3), a volume percentage of ethanol in the ethanol aqueous solution may be conventional in the art, which may be preferably 90% to 96% and more preferably 95%.

In a preferred embodiment of the present disclosure, the raw material composition of a biodegradable material may include the following components, in parts by weight: 100 parts of PBAT, 14.2 to 100 parts of PLA, 14.2 to 100 parts of hemicellulose, 14.2 to 25 parts of starch, and 11.4 to 20 parts of an additive;
where the additive may include one or more from the group consisting of 1.42 to 2.5 parts of a crosslinking agent, 8.5 to 15 parts of a plasticizer, and 1.4 to 2.5 parts of a lubricant; and the crosslinking agent may be one or more from the group consisting of DCP, BPO, and 2,5-dimethyl-2,5-di-(tert-butylperoxy)hexane.

In a preferred embodiment of the present disclosure, the raw material composition of a biodegradable material may include the following components, in parts by weight: 100 parts of PBAT, 14.2 to 100 parts of PLA, 14.2 to 100 parts of hemicellulose, 14.2 to 25 parts of starch, 11.4 to 20 parts of an additive, and 4.2 to 7.5 parts of a biodegradable color concentrate and/or a biodegradable toner;
where the additive may include one or more from the group consisting of 1.42 to 2.5 parts of a crosslinking agent, 8.5 to 15 parts of a plasticizer, and 1.4 to 2.5 parts of a lubricant; and the crosslinking agent may be one or more from the group consisting of DCP, BPO, and 2,5-dimethyl-2,5-di-(tert-butylperoxy)hexane.

In a preferred embodiment of the present disclosure, the raw material composition of a biodegradable material may be composed of the following components, in parts by weight: 100 parts of PBAT, 14.2 to 100 parts of PLA, 14.2 to 100 parts of hemicellulose, 14.2 to 25 parts of starch, 11.4 to 20 parts of an additive, and 4.2 to 7.5 parts of a biodegradable color concentrate and/or a biodegradable toner;
where the additive may include one or more from the group consisting of 1.42 to 2.5 parts of a crosslinking agent, 8.5 to 15 parts of a plasticizer, and 1.4 to 2.5 parts of a lubricant; and the crosslinking agent may be one or more from the group consisting of DCP, BPO, and 2,5-dimethyl-2,5-di-(tert-butylperoxy)hexane.

The present disclosure also provides a preparation method of a biodegradable material, specifically including: subjecting the raw material composition of a biodegradable described above to mixing and plasticizing extrusion in sequence.

Conditions and methods for the mixing may be conventional conditions and methods of such an operation in the art, and the mixing may generally be conducted in a high-speed mixer.

Conditions and methods for the plasticizing extrusion may be conventional conditions and methods of such an operation in the art, and the plasticizing extrusion may generally be conducted in a parallel twin-screw extruder.

When the plasticizing extrusion is conducted in the parallel twin-screw extruder, temperatures of zones 1 to 6 of the parallel twin-screw extruder may be conventional temperatures for such an operation in the art, which may be preferably 80°C to 240°C, more preferably 100°C to 220°C, and further more preferably 110°C to 200°C; and still further more preferably, the temperatures of the zones 1 to 6 may be "130°C to 150°C, 135°C to 155°C, 140°C to 160°C, 145°C to 165°C, 145°C to 165°C, and 145°C to 165°C" or "160°C to 180°C, 165°C to 185°C, 170°C to 190°C, 175°C to 195°C, and 175°C to 195°C", for example, the temperatures of the zones 1 to 6 may be any one from the group consisting of "130°C, 135°C, 140°C, 145°C, 145°C, and 145°C", "140°C, 145°C, 150°C, 155°C, 155°C, and 155°C", "150°C, 155°C, 160°C, 165°C, 165°C, and 165°C", "160°C, 165°C, 170°C, 175°C, 175°C, and 175°C", and "180°C, 185°C, 190°C, 195°C, 195°C, and 195°C".

When the plasticizing extrusion is conducted in the parallel twin-screw extruder, a temperature of a die head of the parallel twin-screw extruder may be a conventional temperature for such an operation in the art, which may be preferably 80°C to 240°C, more preferably 100°C to 220°C, and further more preferably 120°C to 200°C, such as any one from the group consisting of 150°C, 160°C, 170°C, and 190°C.

When the plasticizing extrusion is conducted in the parallel twin-screw extruder, a rotational speed of the parallel twin-screw extruder may be a conventional rotational speed for such an operation in the art, which may be preferably 30 rpm to 600 rpm, more preferably 60 rpm to 450 rpm, and further more preferably 120 rpm to 300 rpm, such as 150 rpm or 200 rpm.

The plasticizing extrusion in the preparation method of a biodegradable material may further include granulation.

The present disclosure also provides a biodegradable material prepared by the preparation method of a biodegradable material described above.

The present disclosure also provides use of the biodegradable material described above as a raw material in the preparation of a biodegradable product.

The biodegradable product may be a biodegradable substrate or a biodegradable pest-trapping board.

The biodegradable substrate may be obtained by subjecting the biodegradable material to extrusion molding. Conditions and methods for the extrusion molding may be conventional conditions and methods for such an operation in the art, and the extrusion molding may preferably be conducted in an extruder. A temperature of the extrusion molding may be a conventional temperature of such an operation in the art, which may be preferably 90°C to 220°C.

A preparation method of the biodegradable pest-trapping board may include the following steps:
(1) subjecting the biodegradable material to extrusion molding to obtain a biodegradable substrate; and
(2) spray-coating a pest-trapping glue on both sides of the biodegradable substrate.

In step (1), conditions and methods for the extrusion molding may be conventional conditions and methods for such an operation in the art, and the extrusion molding may preferably be conducted in an extruder. A temperature of the extrusion molding may be a conventional temperature of such an operation in the art, which may be preferably 90°C to 220°C and more preferably 170°C to 220°C.

In step (2), a thickness of the pest-trapping glue may be a conventional thickness of such a material in the art, which may be preferably 0.005 mm to 0.08 mm, more preferably 0.01 mm to 0.06 mm, and further more preferably 0.015 mm to 0.04 mm, such as 0.03 mm.

In step (2), after the pest-trapping glue is spray-coated, it may further include covering with release paper.

The release paper may be release paper that is conventionally used in the art to prevent adhesion among various biodegradable pest-trapping boards and protect the pest-trapping glue from being polluted.

On the basis of conforming to common knowledge in the art, the above-mentioned preferred conditions may be combined arbitrarily to obtain preferred examples of the present disclosure.

The reagents and raw materials used in the present disclosure are all commercially available.

Beneficial effects of the present disclosure: The biodegradable material and biodegradable product such as biodegradable pest-trapping board prepared by the present disclosure may be completely degraded by microorganisms in the nature to finally produce carbon dioxide and water, causing no environmental pollution. In the present disclosure, hemicellulose and starch are added into a biodegradable resin, which reduces a cost of the biodegradable pest-trapping board and improves the mechanical properties of the biodegradable material. Moreover, the present disclosure expands the use of hemicellulose and improves the economic benefits of hemicellulose.

### DETAILED DESCRIPTION OF THE EMBODIMENTS

The present disclosure is further described below through examples, but the present disclosure is not limited to the scope of the described examples. The experimental methods in the following examples which are not specified with specific conditions are conducted according to conventional conditions or according to product instructions.

In the following examples and comparative examples, the PBAT used has an MFR of 4 g/10 min at 190°C/2.16 kg; and the PLA used has an MFR of 3.5 g/10 min at 190°C/2.16 kg.

### Example 1

Preparation of wood hemicellulose: 250 g of a wood was washed, crushed, and cooked at 135°C for 30 min, and a resulting mixture was filtered to obtain a filter residue; the filter residue was subjected to extraction at 80°C for 2 h with 500 g of a 10 g/dL NaOH aqueous solution, and a resulting extraction solution was filtered to obtain a filtrate; a pH of the filtrate was adjusted to 7 with 6 mol/L hydrochloric acid, and then the filtrate was centrifuged at 3,000 r/min for 20 min to obtain a precipitate A; and the precipitate A was soaked in 750 g of a 95% ethanol aqueous solution, and when there was no precipitate, a resulting mixture was centrifuged at 3,000 r/min for 20 min to obtain a slurry precipitate for later use, which was the wood hemicellulose.

A raw material composition of a biodegradable material was mixed in a high-speed mixer, and then subjected to extrusion and granulation in a parallel twin-screw extruder to obtain the biodegradable material. Temperatures of zones 1 to 6 of the parallel twin-screw extruder were 180°C, 185°C, 190°C, 195°C, 195°C, and 195°C, respectively. In the parallel twin-screw extruder, a die head had a temperature of 190°C and a screw had a rotational speed of 200 rpm. The types and amounts of various components in the raw material composition of the biodegradable material were shown in Table 1. The wood hemicellulose in Table 1 was prepared by the above-mentioned preparation method of wood hemicellulose.

**Table 1**

| Component | Specific component | Amount (parts) |
|---|---|---|
| PBAT | PBAT | 70 |
| PLA | PLA | 10 |
| Hemicellulose | Wood hemicellulose | 10 |
| Starch | Corn starch | 10 |
| Biodegradable color concentrate | Biodegradable yellow concentrate | 3 |
| Crosslinking agent | DCP | 1 |
| Plasticizer | Glycerin | 6 |
| Lubricant | Stearic acid | 1 |

The prepared biodegradable material was subjected to extrusion molding in an extruder, and then a product was slit to obtain a biodegradable substrate; and a pest-trapping glue was spray-coated on both sides of the biodegradable substrate to obtain a biodegradable pest-trapping board. The extrusion molding was conducted at 170°C, and the pest-trapping glue had a thickness of 0.03 mm.

### Example 2

Preparation of wood hemicellulose: 250 g of a wood was washed, crushed, and cooked at 135°C for 30 min, and a resulting mixture was filtered to obtain a filter residue; the filter residue was subjected to extraction at 80°C for 2 h with 500 g of a 10 g/dL NaOH aqueous solution, and a resulting extraction solution was filtered to obtain a filtrate; a pH of the filtrate was adjusted to 7 with 6 mol/L hydrochloric acid, and then the filtrate was centrifuged at 3,000 r/min for 20 min to obtain a precipitate A; and the precipitate A was soaked in 750 g of a 95% ethanol aqueous solution, and when there was no precipitate, a resulting mixture was centrifuged at 3,000 r/min for 20 min to obtain a slurry precipitate for later use, which was the wood hemicellulose.

A raw material composition of a biodegradable material was mixed in a high-speed mixer, and then subjected to extrusion and granulation in a parallel twin-screw extruder to obtain the biodegradable material. Temperatures of zones 1 to 6 of the parallel twin-screw extruder were 130°C, 135°C, 140°C, 145°C, 145°C, and 145°C, respectively. In the parallel twin-screw extruder, a die head had a temperature of 150°C and a screw had a rotational speed of 300 rpm. The types and amounts of various components in the raw material composition of the biodegradable material were shown in Table 2. The wood hemicellulose in Table 2 was prepared by the above-mentioned preparation method of wood hemicellulose.

**Table 2**

| Component | Specific component | Amount (parts) |
|---|---|---|
| PBAT | PBAT | 40 |
| PLA | PLA | 10 |
| Hemicellulose | Wood hemicellulose | 40 |
| Starch | Corn starch | 10 |
| Biodegradable color concentrate | Biodegradable yellow concentrate | 3 |
| Crosslinking agent | DCP | 1 |
| Plasticizer | ESO | 6 |
| Lubricant | Calcium stearate | 1 |

The prepared biodegradable material was subjected to extrusion molding in an extruder, and then a product was slit to obtain a biodegradable substrate; and a pest-trapping glue was spray-coated on both sides of the biodegradable substrate to obtain a biodegradable pest-trapping board. The extrusion molding was conducted at 170°C, and the pest-trapping glue had a thickness of 0.03 mm.

### Example 3

Preparation of cotton stalk hemicellulose: 250 g of cotton stalk was washed, crushed, and cooked at 135°C for 30 min, and a resulting mixture was filtered to obtain a filter residue; the filter residue was subjected to extraction at 80°C for 2 h with 500 g of a 10 g/dL NaOH aqueous solution, and a resulting extraction solution was filtered to obtain a filtrate; a pH of the filtrate was adjusted to 7 with 6 mol/L hydrochloric acid, and then the filtrate was centrifuged at 3,000 r/min for 20 min to obtain a precipitate A; and the precipitate A was soaked in 750 g of a 95% ethanol aqueous solution, and when there was no precipitate, a resulting mixture was centrifuged at 3,000 r/min for 20 min to obtain a slurry precipitate for later use, which was the cotton stalk hemicellulose.

A raw material composition of a biodegradable material was mixed in a high-speed mixer, and then subjected to extrusion and granulation in a parallel twin-screw extruder to obtain the biodegradable material. Temperatures of zones 1 to 6 of the parallel twin-screw extruder were 160°C, 165°C, 170°C, 175°C, 175°C, and 175°C, respectively. In the parallel twin-screw extruder, a die head had a temperature of 170°C and a screw had a rotational speed of 200 rpm. The types and amounts of various components in the raw material composition of the biodegradable material were shown in Table 3. The cotton stalk hemicellulose in Table 3 was prepared by the above-mentioned preparation method of cotton stalk hemicellulose.

**Table 3**

| Component | Specific component | Amount (parts) |
|---|---|---|
| PBAT | PBAT | 40 |
| PLA | PLA | 40 |
| Hemicellulose | Cotton stalk hemicellulose | 10 |
| Starch | Corn starch | 10 |
| Biodegradable color concentrate | Biodegradable yellow concentrate | 3 |
| Crosslinking agent | DCP | 1 |
| Plasticizer | Glycerin | 6 |
| Lubricant | Calcium stearate | 1 |

The prepared biodegradable material was subjected to extrusion molding in an extruder, and then a product was slit to obtain a biodegradable substrate; and a pest-trapping glue was spray-coated on both sides of the biodegradable substrate to obtain a biodegradable pest-trapping board. The extrusion molding was conducted at 170°C, and the pest-trapping glue had a thickness of 0.03 mm.

### Example 4

Preparation of rice straw hemicellulose: 250 g of rice straw was washed, crushed, and cooked at 135°C for 30 min, and a resulting mixture was filtered to obtain a filter residue; the filter residue was subjected to extraction at 80°C for 2 h with 500 g of a 10 g/dL NaOH aqueous solution, and a resulting extraction solution was filtered to obtain a filtrate; a pH of the filtrate was adjusted to 7 with 6 mol/L hydrochloric acid, and then the filtrate was centrifuged at 3,000 r/min for 20 min to obtain a precipitate A; and the precipitate A was soaked in 750 g of a 95% ethanol aqueous solution, and when there was no precipitate, a resulting mixture was centrifuged at 3,000 r/min for 20 min to obtain a slurry precipitate for later use, which was the rice straw hemicellulose.

A raw material composition of a biodegradable material was mixed in a high-speed mixer, and then subjected to extrusion and granulation in a parallel twin-screw extruder to obtain the biodegradable material. Temperatures of zones 1 to 6 of the parallel twin-screw extruder were 150°C, 155°C, 160°C, 165°C, 165°C, and 165°C, respectively. In the parallel twin-screw extruder, a die head had a temperature of 160°C and a screw had a rotational speed of 150 rpm. The types and amounts of various components in the raw material composition of the biodegradable material were shown in Table 4. The rice straw hemicellulose in Table 4 was prepared by the above-mentioned preparation method of rice straw hemicellulose.

**Table 4**

| Component | Specific component | Amount (parts) |
|---|---|---|
| PBAT | PBAT | 55 |
| PLA | PLA | 15 |
| Hemicellulose | Rice straw hemicellulose | 20 |
| Starch | Potato starch | 10 |
| Biodegradable color concentrate | Biodegradable yellow concentrate | 3 |
| Crosslinking agent | BPO | 1 |
| Plasticizer | ATBC | 6 |
| Lubricant | PE wax | 1 |

The prepared biodegradable material was subjected to extrusion molding in an extruder, and then a product was slit to obtain a biodegradable substrate; and a pest-trapping glue was spray-coated on both sides of the biodegradable substrate to obtain a biodegradable pest-trapping board. The extrusion molding was conducted at 170°C, and the pest-trapping glue had a thickness of 0.03 mm.

### Example 5

Preparation of hemp hemicellulose: 250 g of hemp was washed, crushed, and cooked at 135°C for 30 min, and a resulting mixture was filtered to obtain a filter residue; the filter residue was subjected to extraction at 80°C for 2 h with 500 g of a 10 g/dL NaOH aqueous solution, and a resulting extraction solution was filtered to obtain a filtrate; a pH of the filtrate was adjusted to 7 with 6 mol/L hydrochloric acid, and then the filtrate was centrifuged at 3,000 r/min for 20 min to obtain a precipitate A; and the precipitate A was soaked in 750 g of a 95% ethanol aqueous solution, and when there was no precipitate, a resulting mixture was centrifuged at 3,000 r/min for 20 min to obtain a slurry precipitate for later use, which was the hemp hemicellulose.

A raw material composition of a biodegradable material was mixed in a high-speed mixer, and then subjected to extrusion and granulation in a parallel twin-screw extruder to obtain the biodegradable material. Temperatures of zones 1 to 6 of the parallel twin-screw extruder were 140°C, 145°C, 150°C, 155°C, 155°C, and 155°C, respectively. In the parallel twin-screw extruder, a die head had a temperature of 150°C and a screw had a rotational speed of 200 rpm. The types and amounts of various components in the raw material composition of the biodegradable material were shown in Table 5. The hemp hemicellulose in Table 5 was prepared by the above-mentioned preparation method of hemp hemicellulose.

**Table 5**

| Component | Specific component | Amount (parts) |
|---|---|---|
| PBAT | PBAT | 55 |
| PLA | PLA | 15 |
| Hemicellulose | Hemp hemicellulose | 20 |
| Starch | Wheat starch | 10 |
| Biodegradable color concentrate | Biodegradable yellow concentrate | 3 |
| Crosslinking agent | BPO | 1 |
| Plasticizer | ESO | 6 |
| Lubricant | Calcium stearate | 1 |

The prepared biodegradable material was subjected to extrusion molding in an extruder, and then a product was slit to obtain a biodegradable substrate; and a pest-trapping glue was spray-coated on both sides of the biodegradable substrate to obtain a biodegradable pest-trapping board. The extrusion molding was conducted at 170°C, and the pest-trapping glue had a thickness of 0.03 mm.

### Example 6

Preparation of cotton stalk hemicellulose: 250 g of cotton stalk was washed, crushed, and cooked at 135°C for 30 min, and a resulting mixture was filtered to obtain a filter residue; the filter residue was subjected to extraction at 80°C for 2 h with 500 g of a 10 g/dL NaOH aqueous solution, and a resulting extraction solution was filtered to obtain a filtrate; a pH of the filtrate was adjusted to 7 with 6 mol/L hydrochloric acid, and then the filtrate was centrifuged at 3,000 r/min for 20 min to obtain a precipitate A; and the precipitate A was soaked in 750 g of a 95% ethanol aqueous solution, and when there was no precipitate, a resulting mixture was centrifuged at 3,000 r/min for 20 min to obtain a slurry precipitate for later use, which was the cotton stalk hemicellulose.

A raw material composition of a biodegradable material was mixed in a high-speed mixer, and then subjected to extrusion and granulation in a parallel twin-screw extruder to obtain the biodegradable material. Temperatures of zones 1 to 6 of the parallel twin-screw extruder were 180°C, 185°C, 190°C, 195°C, 195°C, and 195°C, respectively. In the parallel twin-screw extruder, a die head had a temperature of 190°C and a screw had a rotational speed of 300 rpm. The types and amounts of various components in the raw material composition of the biodegradable material were shown in Table 6. The cotton stalk hemicellulose in Table 6 was prepared by the above-mentioned preparation method of cotton stalk hemicellulose.

**Table 6**

| Component | Specific component | Amount (parts) |
|---|---|---|
| PBAT | PBAT | 40 |
| PLA | PLA | 30 |
| Hemicellulose | Cotton stalk hemicellulose | 20 |
| Starch | Tapioca starch | 10 |
| Biodegradable color concentrate | Biodegradable yellow concentrate | 3 |
| Crosslinking agent | DCP | 1 |
| Plasticizer | Glycerin | 6 |
| Lubricant | Calcium stearate | 1 |

The prepared biodegradable material was subjected to extrusion molding in an extruder, and then a product was slit to obtain a biodegradable substrate; and a pest-trapping glue was spray-coated on both sides of the biodegradable substrate to obtain a biodegradable pest-trapping board. The extrusion molding was conducted at 170°C, and the pest-trapping glue had a thickness of 0.03 mm.

### Comparative Example 1

Step (1) Preparation of a PP pest-trapping board masterbatch:
A raw material composition of the PP pest-trapping board masterbatch was mixed in a high-speed mixer, and a resulting mixture was subjected to extrusion and granulation in a twin-screw extruder to obtain the PP pest-trapping board masterbatch, where temperatures of zones 1 to 6 of the twin-screw extruder were 180°C, 185°C, 190°C, 195°C, 195°C, and 195°C, respectively; a die head had a temperature of 190°C, and a screw had a rotational speed of 200 rpm. The types and amounts of raw material components for the PP pest-trapping board masterbatch were shown in Table 7.

**Table 7**

| Component | Specific component | Amount (parts) |
|---|---|---|
| PP | PP | 80 |
| Inorganic filler | Calcium carbonate | 20 |
| Biodegradable color concentrate | Biodegradable yellow concentrate | 3 |
| Compatiblizing agent | Maleic anhydride-grafted PE | 1 |
| Plasticizer | ESO | 6 |
| Lubricant | Calcium stearate | 1 |

### Step (2) Preparation of a PP pest-trapping board substrate

The PP pest-trapping board masterbatch obtained in step (1) was subjected to extrusion molding in an extruder, and a product was slit to obtain the PP pest-trapping board substrate, where the extrusion molding was conducted at 170°C.

### Step (3) Preparation of a PP pest-trapping board

A pest-trapping glue was spray-coated on both sides of the PP pest-trapping board substrate to obtain the PP pest-trapping board, where a pest-trapping glue layer had a thickness of 0.03 mm.

### Comparative Example 2

Step (1) Preparation of a PVC pest-trapping board masterbatch:
A raw material composition of the PVC pest-trapping board masterbatch was mixed in a high-speed mixer, and a resulting mixture was subjected to extrusion and granulation in a twin-screw extruder to obtain the PVC pest-trapping board masterbatch, where temperatures of zones 1 to 6 of the twin-screw extruder were 150°C, 155°C, 160°C, 165°C, 165°C, and 165°C, respectively; a die head had a temperature of 160°C, and a screw had a rotational speed of 130 rpm. The types and amounts of raw material components for the PVC pest-trapping board masterbatch were shown in Table 8.

**Table 8**

| Component | Specific component | Amount (parts) |
|---|---|---|
| PVC | PVC | 70 |
| Inorganic filler | Calcium carbonate | 30 |
| Biodegradable color concentrate | Biodegradable yellow concentrate | 3 |
| Plasticizer | ATBC | 6 |
| Lubricant | Calcium stearate | 1 |

### Step (2) Preparation of a PVC pest-trapping board substrate

The PVC pest-trapping board masterbatch obtained in step (1) was subjected to extrusion molding at 165°C in an extruder to obtain the PVC pest-trapping board substrate.

### Step (3) Preparation of a PVC pest-trapping board

A pest-trapping glue was spray-coated on both sides of the PVC pest-trapping board substrate to obtain the PVC pest-trapping board, where a pest-trapping glue layer had a thickness of 0.03 mm.

### Comparative Example 3

In the preparation of a biodegradable substrate and a biodegradable pest-trapping board, conditions and parameters in this comparative example were the same as in Example 1 except that no wood hemicellulose was added.

### Comparative Example 4

A biodegradable product was provided in this comparative example, which was composed of the following components, in parts by weight: 60 parts of PBAT, 10 parts of PLA, 15 parts of papermaking waste, 15 parts of corn starch, 1 part of DCP, 6 parts of ESO, and 1 part of calcium stearate. The biodegradable product of this comparative example was prepared as follows:
(1) the papermaking waste was dried, crushed, and sieved to obtain a papermaking waste powder of 50 to 5,000 mesh; and 60 parts of the PBAT, 10 parts of the PLA, 15 parts of the papermaking waste powder, 15 parts of the corn starch, 1 part of the DCP, 6 parts of the ESO, and 1 part of calcium stearate were mixed in a high-speed mixer for 300 min at 120°C and 600 rpm to obtain an initial mixture;
(2) the initial mixture was subjected to extrusion and granulation in a twin-screw extruder to obtain a biodegradable product masterbatch, where temperatures of zones 1 to 6 of the twin-screw extruder were 130°C, 135°C, 140°C, 145°C, 145°C, and 145°C, respectively; a die head of the twin-screw extruder had a temperature of 150°C; and a screw had a rotational speed of 200 rpm; and
(3) the prepared biodegradable product masterbatch was subjected to extrusion molding in an extruder, and a product was slit to obtain a biodegradable substrate; and a pest-trapping glue was spray-coated on both sides of the biodegradable substrate to obtain a biodegradable pest-trapping board, where the extrusion molding was conducted at 170°C, and the pest-trapping glue had a thickness of 0.03 mm.

Effect Example:
According to a method in the standard (GB/T1040.2-2006), the biodegradable substrates prepared in Examples 1 to 6 and Comparative Examples 3 and 4, the PP pest-trapping board substrate prepared in Comparative Example 1, and the PVC pest-trapping board substrate prepared in Comparative Example 2 were prepared into dumbbell-shaped stripes, and a universal electronic tensile tester (KY8000C) was used to test the tensile strength and elongation at break of the stripes. Results were shown in Table 9.

The biodegradable pest-trapping boards prepared in Examples 1 to 6 and Comparative Examples 3 and 4, the PP pest-trapping board prepared in Comparative Example 1, and the PVC pest-trapping board prepared in Comparative Example 2 were hung in a tomato field. The test was conducted in an adult pest prevalent period. 6 pest-trapping boards were hung in each plot, and 3 replicates were set for each treatment. 72 h after the boards were hung, an average pest-trapping amount was counted. The average pest-trapping amount was calculated by dividing the total number of trapped pests on all boards by the number of boards. Results were shown in Table 9.

**Table 9**

| | Tensile strength/MPa | Elongation at break/% | Average pest-trapping amount |
|---|---|---|---|
| Example 1 | 17.1 | 480 | 106.7 |
| Example 2 | 15.8 | 346 | 110.0 |
| Example 3 | 21.3 | 322 | 114.3 |
| Example 4 | 17.6 | 420 | 111.7 |
| Example 5 | 18.0 | 387 | 105.3 |
| Example 6 | 19.8 | 365 | 108.0 |
| Comparative Example 1 | 15.6 | 308 | 87.3 |
| Comparative Example 2 | 14.1 | 228 | 74.7 |
| Comparative Example 3 | 15.3 | 324 | 92.0 |
| Comparative Example 4 | 14.7 | 307 | 93.3 |

It can be seen from the results that the biodegradable pest-trapping board prepared by the present disclosure are better than the traditional PP pest-trapping board and PVC pest-trapping board in both the mechanical properties and the average pest-trapping amount, and can meet use requirements.

Although specific implementations of the present disclosure are described above, those skilled in the art should understand that these are merely examples, and various changes or modifications can be made to these implementations without departing from the principle of the present disclosure. Therefore, the claimed scope of the present disclosure shall be defined by the appended claims.

## Claims

1. A raw material composition of a biodegradable material, comprising the following components, in parts by weight: 100 parts of poly(butylene adipate-co-terephthalate) (PBAT), 14.2 to 100 parts of polylactic acid (PLA), 14.2 to 100 parts of hemicellulose, 14.3 to 50 parts of starch, and 2.8 to 37.5 parts of an additive;
wherein the additive comprises one or more from the group consisting of 0.7 to 5 parts of a crosslinking agent, 1.4 to 20 parts of a plasticizer, and 0.7 to 7.5 parts of a lubricant; and the crosslinking agent is one or more from the group consisting of dicumyl peroxide (DCP), benzoyl peroxide (BPO), and 2,5-dimethyl-2,5-di-(tert-butylperoxy)hexane.

2. The raw material composition of the biodegradable material according to claim 1, wherein the PBAT has a melt flow rate (MFR) of 3 to 5 g/10 min and preferably 4 to 5 g/10 min at 190°C/2.16 kg.

3. The raw material composition of the biodegradable material according to claim 1 or 2 wherein the PLA has an MFR of 3 to 5 g/10 min and preferably 3.5 to 5 g/10 min at 190°C/2.16 kg.

4. The raw material composition of the biodegradable material according to any of claims 1 to 3 wherein the starch is one or more from the group consisting of tapioca starch, corn starch, potato starch, wheat starch, cationic modified starch, and anionic modified starch, and is preferably any one from the group consisting of corn starch, potato starch, wheat starch, and tapioca starch.

5. The raw material composition of the biodegradable material according to any of claims 1 to 4 wherein the crosslinking agent is DCP or BPO.

6. The raw material composition of the biodegradable material according to any of claims 1 to 5 wherein
the plasticizer is one or more from the group consisting of tributyl citrate (TBC), acetyl tributyl citrate (ATBC), glycerin, and epoxy soybean oil (ESO), and is preferably any one from the group consisting of ATBC, ESO, and glycerin.

7. The raw material composition of the biodegradable material according to any of claims 1 to 6 wherein the lubricant is one or more from the group consisting of stearic acid, calcium stearate, butyl stearate, oleamide, and PE wax, and is preferably any one from the group consisting of stearic acid, calcium stearate, and PE wax.

8. The raw material composition of the biodegradable material according to claim 1, wherein the PLA accounts for 23 to 78 parts by weight, preferably 33 to 60 parts by weight; and
the hemicellulose accounts for 23 to 78 parts by weight, preferably 33 to 60 parts by weight; and
the starch accounts for 8.3 to 40 parts by weight, preferably 14.2 to 25 parts by weight; and
the additive accounts for 4.6 to 29 parts by weight, preferably 11.4 to 20 parts by weight; and
the crosslinking agent accounts for 1 to 3.75 parts by weight, preferably 1.42 to 2.5 parts by weight; and
the plasticizer accounts for 2.8 to 17.5 parts by weight, preferably 8.5 to 15 parts by weight; and
the lubricant accounts for 1.4 to 6.25 parts by weight, preferably 1.4 to 2.5 parts by weight; and
the raw material composition of the biodegradable material further comprises a biodegradable color concentrate and/or a biodegradable toner; the biodegradable color concentrate is preferably a biodegradable yellow concentrate; the biodegradable toner is preferably a biodegradable yellow toner; and based on 100 parts by weight of the PBAT, the biodegradable color concentrate and/or the biodegradable toner accounts for preferably 1.4 to 37.5, more preferably 3 to 26.7, and further more preferably 4.2 to 7.5 parts by weight.

9. The raw material composition of the biodegradable material according to any one of claims 1 to 8, wherein a preparation method of the hemicellulose comprises the following steps:
(1) crushing, cooking, and filtering a plant to obtain a filter residue;
(2) subjecting the filter residue to extraction with a sodium hydroxide aqueous solution, and filtering a resulting extraction solution to obtain a filtrate; and adjusting a pH of the filtrate to 7 to 7.5, and centrifuging the filtrate to obtain a precipitate A; and
(3) mixing the precipitate A with an ethanol aqueous solution, and centrifuging a resulting mixture to obtain a precipitate.

10. The raw material composition of the biodegradable material according to claim 9, wherein in step (1), the plant is one or more from the group consisting of wood, cotton stalk, cotton linter, wheat straw, rice straw, reed, hemp, mulberry bark, *Broussonetia papyrifera* bark, and bagasse, and is preferably any one from the group consisting of wood, cotton straw, and hemp; and
in step (1), the cooking is conducted at 130°C to 140°C and preferably 135°C to 140°C; and
in step (1), the cooking is conducted for 20 min to 40 min and preferably 30 min to 40 min; and
in step (2), the extraction is conducted at 75°C to 85°C and preferably 80°C to 85°C; and
in step (2), the extraction is conducted for 1.5 h to 2.5 h and preferably 2 h to 2.5 h; and
in step (2), the sodium hydroxide aqueous solution has a concentration of 9 g/dL to 11 g/dL and preferably 10 g/dL; and
in step (2), a mass ratio of the sodium hydroxide aqueous solution to the plant is 2:1; and
in step (2), the pH is adjusted to 7 to 7.5 using an acidic adjusting agent, and the acidic adjusting agent is preferably hydrochloric acid with a concentration of 5 mol/L to 7 mol/L and more preferably hydrochloric acid with a concentration of 6 mol/L; and
in step (2), the centrifugation is conducted at a rotational speed of 2,500 r/min to 3,500 r/min and preferably 3,000 r/min to 3,500 r/min;
in step (2), the centrifugation is conducted for 15 min to 25 min and preferably 20 min to 25 min; and
in step (3), a mass ratio of the ethanol aqueous solution to the plant is 3:1; and
in step (3), the centrifugation is conducted at a rotational speed of 2,500 r/min to 3,500 r/min and preferably 3,000 r/min to 3,500 r/min;
in step (3), the centrifugation is conducted for 15 min to 25 min and preferably 20 min to 25 min; and
in step (3), a volume percentage of ethanol in the ethanol aqueous solution is 90% to 96% and preferably 95%.

11. A preparation method of a biodegradable material, specifically comprising:
subjecting the raw material composition of the biodegradable material according to any one of claims 1 to 10 to mixing and plasticizing extrusion in sequence.

12. The preparation method of the biodegradable material according to claim 11, wherein the plasticizing extrusion is conducted in a parallel twin-screw extruder; and wherein
zones 1 to 6 of the parallel twin-screw extruder have a temperature of 80°C to 240°C, preferably 100°C to 220°C, and more preferably 110°C to 200°C; and further more preferably, temperatures of the zones 1 to 6 are "130°C to 150°C, 135°C to 155°C, 140°C to 160°C, 145°C to 165°C, 145°C to 165°C, and 145°C to 165°C" or "160°C to 180°C, 165°C to 185°C, 170°C to 190°C, 175°C to 195°C, and 175°C to 195°C";
a die head of the parallel twin-screw extruder has a temperature of 80°C to 240°C, preferably 100°C to 220°C, and more preferably 120°C to 200°C;
the parallel twin-screw extruder has a rotational speed of 30 rpm to 600 rpm, preferably 60 rpm to 450 rpm, and more preferably 120 rpm to 300 rpm; and
preferably, the plasticizing extrusion in the preparation method of the biodegradable material further comprises granulation.

13. A biodegradable material prepared by the preparation method of the biodegradable material according to claim 11 or 12.

14. The biodegradable material according to claim 13 for use as a raw material in the preparation of a biodegradable product.

15. The biodegradable material for use according to claim 14, wherein the biodegradable product is a biodegradable substrate or a biodegradable pest-trapping board;
preferably, the biodegradable substrate is obtained by subjecting the biodegradable material to extrusion molding, and the extrusion molding is conducted at a temperature preferably of 90°C to 220°C;
preferably, a preparation method of the biodegradable pest-trapping board comprises the following steps:
(1) subjecting the biodegradable material to the extrusion molding to obtain a biodegradable substrate; and
(2) spray-coating a pest-trapping glue on both sides of the biodegradable substrate;
wherein in step (1), the extrusion molding is conducted at a temperature of preferably 90°C to 220°C and more preferably 170°C to 220°C;
in step (2), the pest-trapping glue has a thickness of preferably 0.005 mm to 0.08 mm, more preferably 0.01 mm to 0.06 mm, and further more preferably 0.015 mm to 0.04 mm; and
in step (2), after the pest-trapping glue is spray-coated, the preparation method of the biodegradable pest-trapping board preferably further comprises covering with release paper.

## Patentansprüche

1. Eine Rohstoffzusammensetzung eines biologisch abbaubaren Materials, umfassend die folgenden Komponenten in Gewichtsteilen: 100 Teile Poly(butylenadipat-co-terephthalat) (PBAT), 14,2 bis 100 Teile Polymilchsäure (PLA), 14,2 bis 100 Teile Hemicellulose, 14,3 bis 50 Teile Stärke und 2,8 bis 37,5 Teile eines Zusatzstoffes;
wobei der Zusatzstoff einen oder mehrere Teile einer Gruppe umfasst, die aus 0,7 bis 5 Teilen Vernetzungsmittel, 1,4 bis 20 Teilen Weichmacher und 0,7 bis 7,5 Teilen eines Schmiermittels besteht; und wobei das Vernetzungsmittel einen oder mehrere Teile einer Gruppe umfasst, die aus Dicumylperoxid (DCP), Benzoylperoxid (BPO) und 2,5-Dimethyl-2,5-di-(tert-butylperoxy)hexan besteht.

2. Die Rohstoffzusammensetzung des biologisch abbaubaren Materials nach Anspruch 1, wobei das PBAT eine Schmelzflussrate (MFR) von 3 bis 5 g/10 Min., vorzugsweise 4 bis 5 g/10 Min. bei 190 °C/2,16 kg aufweist.

3. Die Rohstoffzusammensetzung des biologisch abbaubaren Materials nach Anspruch 1 oder 2, wobei die Polymilchsäure eine Schmelzflussrate (MFR) von 3 bis 5 g/10 Min., vorzugsweise 3,5 bis 5 g/10 Min. bei 190 °C/2,16 kg aufweist.

4. Die Rohstoffzusammensetzung des biologisch abbaubaren Materials nach einem der Ansprüche 1 bis 3, wobei die Stärke aus der Gruppe bestehend aus Tapiokastärke, Maisstärke, Kartoffelstärke, Weizenstärke, kationische modifizierte Stärke und anionisch modifizierte Stärke ist, vorzugsweise aus der Gruppe bestehend aus Maisstärke, Kartoffelstärke, Weizenstärke und Tapiokastärke.

5. Die Rohstoffzusammensetzung des biologisch abbaubaren Materials nach einem der Ansprüche 1 bis 4, wobei das Vernetzungsmittel Dicumylperoxid (DCP) oder Benzoylperoxid (BPO) ist.

6. Die Rohstoffzusammensetzung des biologisch abbaubaren Materials nach einem der Ansprüche 1 bis 5, wobei der Weichmacher aus der Gruppe bestehend aus Tributylcitrat (TBC), Acetyltributylcitrat (ATBC), Glyzerin, Epoxid-Sojabohnenöl (ESO) ist, vorzugsweise aus der Gruppe bestehend aus ATBC, ESO und Glyzerin.

7. Die Rohstoffzusammensetzung des biologisch abbaubaren Materials nach einem der Ansprüche 1 bis 6, wobei das Schmiermittel aus der Gruppe bestehend aus Stearinsäure, Calciumstearat, Butylstearat, Oleamid und PE-Wachs ist, vorzugsweise bestehend aus Stearinsäure, Calciumstearat und PE-Wachs.

8. Die Rohstoffzusammensetzung des biologisch abbaubaren Materials nach Anspruch 1, wobei der Polymilchsäureanteil 23 bis 78 Gewichtsteile beträgt, vorzugsweise 33 bis 60 Gewichtsteile;
der Hemicelluloseanteil 23 bis 78 Gewichtsteile beträgt, vorzugsweise 33 bis 60 Gewichtsteile;
der Stärkeanteil 8,3 bis 40 Gewichtsteile beträgt, vorzugsweise 14,2 bis 25 Gewichtsteile;
der Zusatzstoffanteil 4,6 bis 29 Gewichtsteile beträgt, vorzugsweise 11,4 bis 20 Gewichtsteile;
der Vernetzungsmittelanteil 1 bis 3,75 Gewichtsteile beträgt, vorzugsweise 1,42 bis 2,5 Gewichtsteile;
der Weichmacheranteil 2,8 bis 17,5 Gewichtsteile beträgt, vorzugsweise 8,5 bis 15 Gewichtsteile;
der Schmiermittelanteil 1,4 bis 6,25 Gewichtsteile beträgt, vorzugsweise 1,4 bis 2,5 Gewichtsteile;
die Rohstoffzusammensetzung des biologisch abbaubaren Materials ferner ein biologisch abbaubares Farbkonzentrate und/oder einen biologisch abbaubaren Toner enthält, wobei der das biologisch abbaubare Farbkonzentrat vorzugsweise ein biologisch abbaubares gelbes Konzentrat ist, der biologisch abbaubare Toner vorzugsweise ein biologisch abbaubarer gelber Toner ist und wobei basierend auf 100 Gewichtsteilen PBAT das biologisch abbaubare Farbkonzentrat und/oder der biologisch abbaubare Toner vorzugsweise 1,4 bis 37,5 Teile ausmacht, insbesondere 3 bis 26,7 Gewichtsteile, ganz besonders aber 4,2 bis 7,5 Gewichtsteile.

9. Die Rohstoffzusammensetzung des biologisch abbaubaren Materials nach einem der Ansprüche 1 bis 8, wobei die Präparationsmethode der Hemicellulose die folgenden Schritte umfasst:
(1) Zerkleinern, Kochen und Filtern einen Pflanze, um einen Filterrückstand zu erhalten;
(2) Der Filterrückstand wird einer Extraktion mit einer wässrigen Natriumhydroxidlösung unterzogen und eine daraus resultierende Extraktionslösung wird gefiltert, um ein Filtrat zu erhalten; gefolgt vom Einstellen des pH-Wertes des Filtrats auf 7 bis 7,5 und Zentrifugieren des Filtrats und ein Präzipitat A zu erhalten; und
(3) Mischen des Präzipitats A mit einer wässrigen Ethanollösung und Zentrifugieren eines resultierenden Gemischs, um ein Präzipitat zu erhalten.

10. Die Rohstoffzusammensetzung des biologisch abbaubaren Materials nach Anspruch 9, wobei in Schritt (1) die Pflanze aus einer Gruppe bestehend aus Holz, Baumwollstiel, Baumwoll-Linter, Weizenstroh, Reisstroh, Hanf, Maulbeerrinde, *Broussonetia papyrifera* Rinde und Bagasse ist, vorzugsweise aus der Gruppe von Holz, Baumwollstiel und Hanf; und
in Schritt (1) der Kochvorgang bei einer Temperatur von 130 °C bis 140 °C erfolgt, vorzugsweise 135 °C bis 140 °C;
in Schritt (1) der Kochvorgang 20 bis 40 Minuten dauert, vorzugsweise 30 bis 40 Minuten;
in Schritt (2) der Extraktionsvorgang bei einer Temperatur von 75 °C bis 85 °C erfolgt, vorzugsweise 80 °C bis 85 °C;
in Schritt (2) der Extraktionsvorgang 1,5 bis 2,5 Stunden dauert, vorzugsweise 2 bis 2,5 stunden;
in Schritt (2) die wässrige Natriumhydroxidlösung eine Konzentration von 9 g/dl bis 11 g/dl aufweist, vorzugsweise 10 g/dl;
in Schritt (2) das Massenverhältnis der wässrigen Natriumhydroxidlösung zur Pflanze 2:1 ist;
in Schritt (2) der pH-Wert mittels des sauren Einstellmittels auf 7 bis 7,5 eingestellt und das saure Einstellmittel vorzugsweise Salzsäure mit einer Konzentration von 5 mol/l bis 7 mol/l ist, insbesondere Salzsäure mit einer Konzentration von 6 mol/l;
in Schritt (2) die Zentrifugation mit einer Drehzahl von 2500 min⁻¹ bis 3500 min⁻¹ durchgeführt wird, vorzugsweise 3000 min⁻¹ bis 3500 min⁻¹,
in Schritt (2) die Zentrifugation 15 bis 25 Minuten durchgeführt wird, vorzugsweise 20 bis 25 Minuten;
in Schritt (3) das Massenverhältnis der wässrigen Ethanollösung zur Pflanze 3:1 ist;
in Schritt (3) die Zentrifugation mit einer Drehzahl von 2500 min⁻¹ bis 3500 min⁻¹ durchgeführt wird, vorzugsweise 3000 min⁻¹ bis 3500 min⁻¹,
in Schritt (3) die Zentrifugation 15 bis 25 Minuten durchgeführt wird, vorzugsweise 20 bis 25 Minuten;
in Schritt (3) der Volumenanteil von Ethanol in der wässrigen Ethanollösung 90 % bis 96 % beträgt, vorzugsweise 95 %.

11. Eine Präparationsmethode eines biologisch abbaubaren Materials, speziell umfassend die folgenden Schritte: Aufeinanderfolgendes Mischen und plastifizierende Extrusion der Rohstoffzusammensetzung des biologisch abbaubaren Materials nach einem der Ansprüche 1 bis 10.

12. Die Präparationsmethode des biologisch abbaubaren Materials nach Anspruch 11, wobei die plastifizierende Extrusion in einem parallelen Doppelschneckenextruder durchgeführt wird, wobei
die Zonen 1 bis 6 des parallelen Doppelschneckenextruder eine Temperatur von 80 °C bis 240 °C aufweisen, vorzugsweise 100 °C bis 220 °C, insbesondere 110 °C bis 200 °C; und ganz besonders die Temperaturen der Zonen 1 bis 6 "130 °C bis 150 °C, 135 °C bis 155 °C, 140 °C bis 160 °C, 145 °C bis 165 °C, 145 °C bis 165 °C und 145 °C bis 165 °C" oder "160 °C bis 180 °C, 165 °C bis 185 °C, 170 °C bis 190 °C, 175 °C bis 195 °C und 175 °C bis 195 °C" sind;
ein Extruderkopf des parallelen Doppelschneckenextruders eine Temperatur von 80 °C bis 240 °C aufweist, vorzugsweise 100 °C bis 220 °C, besonders aber 120 °C bis 200 °C;
der parallele Doppelschneckenextruder eine Drehzahl von 30 min⁻¹ bis 600 min⁻¹ aufweist, vorzugsweise 60 min⁻¹ bis 450 min⁻¹, besonders aber 120 min⁻¹ bis 300 min⁻¹; und die plastifizierende Extrusion in der Präparationsmethode des biologisch abbaubaren Materials ferner eine Granulierung enthält.

13. Ein biologisch abbaubares Material, das nach der Präparationsmethode des biologisch abbaubaren Materials nach Anspruch 11 oder 12 zubereitet wird.

14. Das biologisch abbaubare Material nach Anspruch 13 für die Verwendung als Rohmaterial in der Präparation des biologisch abbaubaren Materials.

15. Das biologisch abbaubare Material für die Verwendung nach Anspruch 14, wobei das biologisch abbaubare Produkt ein biologisch abbaubares Substrat oder ein biologisch abbaubares Fangbrett für die Schädlingsbekämpfung ist;
das biologisch abbaubare Substrat vorzugsweise dadurch erhalten wird, dass das biologisch abbaubare Material einem Strangpressverfahren unterzogen wird und das Strangpressverfahren vorzugsweise bei einer Temperatur von 90 °C bis 220 °C durchgeführt wird;
die Präparationsmethode des biologisch abbaubaren Fangbretts für die Schädlingsbekämpfung vorzugsweise die folgenden Schritte umfasst:
(1) Strangpressverfahren des biologisch abbaubaren Materials, um ein biologisch abbaubares Substrat zu erhalten; und
(2) Sprühbeschichtung eines Schädlingsbekämpfungsklebers auf beiden Seiten des biologisch abbaubaren Substrats;
wobei in Schritt (1) das Strangpressverfahren vorzugsweise bei einer Temperatur von 90 °C bis 220 °C, insbesondere 170 °C bis 220 °C erfolgt;
in Schritt (2) der Schädlingsbekämpfungskleber vorzugsweise eine Dicke von 0,005 bis 0,08 mm, insbesondere 0,01 bis 0,06 mm, vor allem aber 0,015 bis 0,04 mm aufweist; und
in Schritt (2) nach der Sprühbeschichtung eines Schädlingsbekämpfungsklebers die Präparationsmethode des biologisch abbaubaren Fangbrett für die Schädlingsbekämpfung ferner eine Bedeckung mit Trennpapier umfasst.

## Revendications

1. Une composition de matériau brut de matériau biodégradable, comprenant les composants suivants, en parties en poids : 100 parties de poly(polybutylène adipate-co-téréphtalate) (PBAT), de 14,2 à 100 parties d'acide polylactique (PLA), de 14,2 à 100 parties d'hémicellulose, de 14,3 à 50 parties d'amidon, et de 2,8 à 37,5 parties d'un additif ;
dans laquelle l'additif comprend un ou plusieurs éléments au sein d'un groupe consistant en 0,7 à 5 parties d'un agent de réticulation, 1,4 à 20 parties d'un plastifiant, et 0,7 à 7,5 parties d'un lubrifiant ; et l'agent de réticulation est un ou plusieurs éléments au sein d'un groupe consistant en du peroxyde de dicumyle (DCP), du peroxyde de benzoyle (BPO), et du 2,5-diméthyle-2,5-di-(tert-butylperoxy)hexane.

2. Une composition de matériau brut de matériau biodégradable selon la revendication 1, dans laquelle le PBAT dispose d'un indice de fluidité (MFR) de 3 à 5 g/10 min et préférablement de 4 à 5 g/10 min à 190°C/2,16 kg.

3. Une composition de matériau brut de matériau biodégradable selon la revendication 1 ou 2 dans laquelle le PLA dispose d'un MFR de 3 à 5 g/10 min et préférablement de 3,5 à 5 g/10 min à 190°C/2,16 kg.

4. Une composition de matériau brut de matériau biodégradable selon l'une quelconque des revendication 1 à 3 dans laquelle l'amidon est un ou plusieurs éléments au sein d'un groupe consistant en de l'amidon de tapioca, de l'amidon de maïs, de l'amidon de pomme de terre, de l'amidon de blé, de l'amidon cationique modifié, et de l'amidon anionique modifié, et est préférablement l'un quelconque au sein d'un groupe consistant en de l'amidon de maïs, de l'amidon de pomme de terre, de l'amidon de blé, et de l'amidon de tapioca.

5. Une composition de matériau brut de matériau biodégradable selon l'une quelconque des revendication 1 à 4 dans laquelle l'agent de réticulation est du DCP ou du BPO.

6. Une composition de matériau brut de matériau biodégradable selon l'une quelconque des revendication 1 à 5 dans laquelle
le plastifiant est un ou plusieurs éléments au sein d'un groupe consistant en du citrate de tributyl (TBC), du citrate acétyl tributyl (ATBC), de la glycérine, et de l'huile de soja époxy (ESO), et est préférablement un élément quelconque au sein d'un groupe consistant en de l'ATBC, de l'ESO, et de la glycérine.

7. Une composition de matériau brut de matériau biodégradable selon l'une quelconque des revendication 1 à 6 dans laquelle le lubrifiant est un ou plusieurs éléments au sein d'un groupe consistant en de l'acide stéarique, du stéarate de calcium, du stéarate de butyle, de l'oléamide, et de la cire de PE, et est préférablement l'un quelconque au sein d'un groupe consistant en de l'acide stéarique, du stéarate de calcium et de la cire de PE.

8. Une composition de matériau brut de matériau biodégradable selon la revendication 1, dans laquelle le PLA compte pour 23 à 78 parties en poids, préférablement 33 à 60 parties en poids ; et
l'hémicellulose compte pour 23 à 78 parties en poids, préférablement 33 à 60 parties en poids ; et
l'amidon compte pour 8,3 à 40 parties en poids, préférablement 14,2 à 25 parties en poids ; et
l'additif compte pour 4,6 à 29 parties en poids, préférablement 11,4 à 20 parties en poids ; et
l'agent de réticulation compte pour 1 à 3,75 parties en poids, préférablement 1,42 à 2,5 parties en poids ; et
le plastifiant compte pour 2,8 à 17,5 parties en poids, préférablement 8,5 à 15 parties en poids ; et
le lubrifiant compte pour 1,4 à 6,25 parties en poids, préférablement 1,4 à 2,5 parties en poids ; et
la composition de matériau brut de matériau biodégradable comprend en outre un concentré de couleur biodégradable et/ou un toner biodégradable ; le concentré de couleur biodégradable est préférablement un concentré de jaune biodégradable ; le toner biodégradable est préférablement un toner jaune biodégradable ; et en se basant sur 100 parties en poids de PBAT, le concentré de couleur biodégradable et/ou le toner biodégradable compte pour préférablement 1,4 à 37,5, plus préférablement 3 à 26,7, et encore plus préférablement 4,2 à 7,5 parties en poids.

9. Une composition de matériau brut de matériau biodégradable selon l'une quelconque des revendication 1 à 8 dans laquelle un procédé de préparation de l'hémicellulose comprend les étapes suivantes :
(1) broyer, cuire, et filtrer une plante pour obtenir un résidu de filtre ;
(2) soumettre le résidu de filtre à extraction par solution aqueuse d'hydroxyde de sodium, et filtrer la solution d'extraction qui en résulte pour obtenir un filtrat ; et ajuster le pH du filtrat de 7 à 7,5, et centrifuger le filtrat pour obtenir un précipité A ; et
(3) mélanger le précipité A à une solution aqueuse d'éthanol, et centrifuger le mélange qui en résulte pour obtenir un précipité.

10. Une composition de matériau brut de matériau biodégradable selon la revendication 9, dans laquelle à l'étape (1), la plante et un ou plusieurs éléments au sein d'un groupe consistant en du bois, de la paille de coton, du linter de coton, de la paille de blé, de la paille de riz, du roseau, du chanvre, de l'écorce de mûrier, de l'écorce de *Broussonetia papyrifera,* et de la bagasse, et est préférablement l'un quelconque au sein d'un groupe consistant en du bois, de la paille de coton, et du chanvre ; et
à l'étape (1), la cuisson est effectuée de 130°C à 140°C et préférablement de 135°C à 140°C ; et
à l'étape (1), la cuisson est effectuée pendant 20 min à 40 min et préférablement pendant 30 min à 40 min ; et
à l'étape (2), l'extraction est effectuée de 75°C à 85°C et préférablement de 80°C à 85°C ; et
à l'étape (2), l'extraction est effectuée pendant 1,5 h à 2,5 h et préférablement pendant 2 h à 2,5 h ; et
à l'étape (2), la solution aqueuse d'hydroxyde de sodium est d'une concentration de 9 g/dL à 11 g/dL et préférablement de 10 g/dL ; et
à l'étape (2), le rapport de masse de la solution aqueuse d'hydroxyde de sodium à la plante est de 2 : 1 ; et
à l'étape (2), le pH est ajusté de 7 à 7,5 à l'aide d'un agent d'ajustement d'acidité, et l'agent d'ajustement d'acidité est préférablement de l'acide chlorhydrique à concentration de 5 mol/L à 7 mol/L et plus préférablement de l'acide chlorhydrique à concentration de 6 mol/L ; et
à l'étape (2), la centrifugation est effectuée à une vitesse de rotation de 2500 t/min à 3500 t/min et préférablement de 3000 t/min à 3500 t/min ;
à l'étape (2), la centrifugation est effectuée pendant 15 min à 25 min et préférablement pendant 20 min à 25 min ; et
à l'étape (3), le rapport de masse de la solution aqueuse d'éthanol à la plante est de 3 : 1 ; et
à l'étape (3), la centrifugation est effectuée à une vitesse de rotation de 2500 t/min à 3500 t/min et préférablement de 3000 t/min à 3500 t/min ;
à l'étape (3), la centrifugation est effectuée pendant 15 min à 25 min et préférablement pendant 20 min à 25 min ; et
à l'étape (3), le pourcentage en volume de l'éthanol dans la solution aqueuse d'éthanol est de 90% à 96% et préférablement de 95%.

11. Un procédé de préparation de matériau biodégradable, comprenant spécifiquement : la soumission de la composition de matériau brut de matériau biodégradable selon l'une quelconque des revendications 1 à 10 au malaxage et à l'extrusion de plastification en séquence.

12. Un procédé de préparation de matériau biodégradable selon la revendication 11, dans lequel l'extrusion de plastification est effectuée par extrudeuse double-vis parallèle ; et dans lequel
les zones 1 à 6 de l'extrudeuse double-vis parallèle sont d'une température de 80°C à 240°C, préférablement de 100°C à 220°C, et plus préférablement de 110°C à 200°C ; et encore plus préférablement, les températures des zones 1 à 6 sont de « 130°C à 150°C, de 135°C à 155°C, de 140°C à 160°C, de 145°C à 165°C, de 145°C à 165°C, et de 145°C à 165°C » ou « de 160°C à 180°C, de 165°C à 185°C, de 170°C à 190°C, de 175°C à 195°C, et de 175°C à 195°C » ;
la tête de l'extrudeuse double-vis parallèle est d'une température de 80°C à 240°C, préférablement de 100°C à 220°C, et plus préférablement de 120°C à 200°C ;
l'extrudeuse double-vis parallèle est d'une vitesse de rotation de 30 tpm à 600 tpm, préférablement de 60 tpm à 450 tpm, et plus préférablement de 120 tpm à 300 tpm ; et préférablement, l'extrusion de plastification dans le procédé de préparation de matériau biodégradable comprend en outre une granulation.

13. Un matériau biodégradable préparé par le procédé de préparation de matériau biodégradable selon la revendication 11 ou 12.

14. Un matériau biodégradable selon la revendication 13 pour une utilisation comme matériau brut dans la préparation d'un produit biodégradable.

15. Un matériau biodégradable selon la revendication 14, dans lequel le produit biodégradable est un substrat biodégradable ou une planche biodégradable de lutte contre les parasites ;
préférablement, le substrat biodégradable est obtenu en soumettant le matériau biodégradable à moulage par extrusion, et le moulage par extrusion est effectué à une température préférablement de 90°C à 220°C ;
préférablement, le procédé de préparation de planche biodégradable de lutte contre les parasites comprend les étapes suivantes :
(1) soumettre le matériau biodégradable à un moulage par extrusion pour obtenir un substrat biodégradable ; et
(2) enduction par pulvérisation de colle de lutte contre les parasites sur les deux faces du substrat biodégradable ;
dans lequel à l'étape (1), le moulage par extrusion est effectué à une température préférablement de 90°C à 220°C et plus préférablement de 170°C à 220°C ;
à l'étape (2), l'épaisseur de la colle de lutte contre les parasites est préférablement de 0,005 mm à 0,08 mm, plus préférablement de 0,01 mm à 0,06 mm, et encore plus préférablement de 0,015 mm à 0,04 mm ; et
à l'étape (2), une fois que la colle de lutte contre les parasites est pulvérisée pour enduction, le procédé de préparation de planche biodégradable de lutte contre les parasites comprend en outre préférablement un recouvrement par papier antiadhésif.
